# EUROPÄISCHE PATENTSCHRIFT

(11) **EP 0 795 179 B1**
(45) Veröffentlichungstag und Bekanntmachung des Hinweises auf die Patenterteilung: **20.01.1999**
(21) Anmeldenummer: 95938344.9
(22) Anmeldetag: 27.11.1995
(51) Int. Cl.: G21C 17/007

(54) **VORRICHTUNG UND VERFAHREN ZUR INSPEKTION EINES AUSSENMANTELS EINES KERNBEHÄLTERS IM BEREICH EINES IHN UMGEBENDEN THERMISCHEN SCHILDES**
DEVICE AND METHOD FOR THE INSPECTION OF THE OUTER WALL OF A REACTOR-CORE CONTAINER IN THE REGION OF THE THERMAL SHIELD SURROUNDING IT
PROCEDE ET DISPOSITIF POUR INSPECTER LA PAROI EXTERIEURE DE L'ENVELOPPE DE COEUR D'UN REACTEUR NUCLEAIRE DANS LA ZONE D'UN BOUCLIER THERMIQUE QUI L'ENTOURE

(30) Priorität: 30.11.1994 DE 4442621
(43) Veröffentlichungstag der Anmeldung: 17.09.1997
(73) Patentinhaber: SIEMENS AKTIENGESELLSCHAFT, 80333 München (DE)
(72) Erfinder: SCHRAMM, Herbert, D-91315 Höchstadt (DE); GOTTFRIED, Roland, D-91094 Langensendelbach (DE); HAAS, Erich, D-90607 Rückersdorf (DE)
(86) Internationale Anmeldenummer: DE9501673
(87) Internationale Veröffentlichungsnummer: WO9617358

(56) Entgegenhaltungen:
- EP-A- 0 418 708
- DE-A- 3 112 201
- DE-U- 8 519 751
- US-A- 4 507 260
- US-A- 4 518 560
- US-A- 4 844 858

## Beschreibung

Die Erfindung bezieht sich auf eine Vorrichtung und ein Verfahren zur Inspektion eines Außenmantels eines Kernbehälters im Bereich eines ihn umgebenden thermischen Schildes.

Zur Überprüfung der Sicherheit nuklearer Kraftwerksanlagen ist es erforderlich, sicherheitsrelevante Anlagenteile, die während ihres regulären Betriebs einer starken Beanspruchung unterliegen, in regelmäßigen Abständen einer Prüfung und Inspektion zu unterziehen. Dazu zählen auch die am Außenmantel eines die Kerneinbauten aufnehmenden Kernbehälters angeordneten Kernbehälter- oder Kernumfassungsschrauben. Diese Kernbehälterschrauben sind jedoch in manchen Anlagen schwer zugänglich, da dort der Kernbehälter eng von einem thermischen Schild umgeben ist. Zwischen dem thermischen Schild und dem Außenmantel des Kernbehälters verbleibt nur ein kleiner Spalt, der beispielsweise zwischen 16 und 50 mm betragen kann und eine Prüfung von außen erschwert.

Der Erfindung liegt nun die Aufgabe zugrunde, eine Vorrichtung zur Inspektion eines Außenmantels eines Kernbehälters anzugeben, die eine Inspektion im räumlich beengten Bereich zwischen dem Kernbehälter und dem ihn umgebenden thermischen Schild ermöglicht. Außerdem liegt der Erfindung die Aufgabe zugrunde, ein Verfahren zur Inspektion eines Außenmantels eines Kernbehälters anzugeben.

Die genannten Aufgaben werden jeweils gelöst mit den Merkmalen der Patentansprüche 1 bzw. 8.

Eine Vorrichtung zur Inspektion eines Außenmantels eines Kernbehälters im Bereich eines ihn umgebenden thermischen Schildes enthält gemäß der Erfindung
a) eine auf dem Kernbehälter fixierbare Ringschiene,
b) einen in Umfangsrichtung auf der Ringschiene verfahrbaren Schlitten,
c) einen am Schlitten axial verschiebbar gelagerten Mast,
d) einen am Mast in Richtung seiner Längsachse verfahrbaren Vertikalschlitten sowie
e) einen am Vertikalschlitten angeordneten, in den Bereich zwischen dem Außenmantel des Kernbehälters und dem thermischen Schild einbringbaren Ausleger, der an seinem freien Ende ein Inspektionsgerät trägt.

In einer bevorzugten Ausgestaltung der Erfindung ist ein quer zur Längsachse des Mastes verschiebbar auf dem Vertikalschlitten angeordneter Ausleger vorgesehen.

Vorzugsweise ist als Ausleger eine Kette vorgesehen.

In einer bevorzugten Ausgestaltung der Erfindung nimmt der Ausleger an seinem freien Ende einen in seiner Längsrichtung verfahrbaren Inspektionsgeräteträger auf.

Vorzugsweise ist auf dem Inspektionsgeräteträger eine Videokamera angeordnet.

In einer weiteren Ausgestaltung der Erfindung ist auf dem Inspektionsgeräteträger ein quer zur Längsachse des Auslegers verschiebbar angeordneter Prüfkopf zur zerstörungsfreien Werkstoffprüfung angeordnet.

In einer insbesondere an ein aus räumlich voneinander getrennten Ringsegmenten aufgebautes thermisches Schild angepaßten Vorrichtung ist in einer Ausgestaltung der Erfindung ein sich quer zur Längsachse des Mastes erstreckender, an die Krümmung des Kernbehälters angepaßter und in Umfangsrichtung verschiebbar angeordneter Ausleger vorgesehen.

Das Verfahren zur Inspektion eines Außenmantels eines Kernbehälters im Bereich eines ihn umgebenden thermischen Schildes umfaßt gemäß der Erfindung folgende Verfahrensschritte:
a) Auf dem Kernbehälter wird eine Ringschiene befestigt,
b) auf die Ringschiene wird ein in Umfangsrichtung verfahrbarer Schlitten aufgegleist,
c) im Schlitten wird ein axial verschiebbar gelagerter Mast angeordnet,
d) über einen am Mast in Richtung seiner Längsachse verfahrbaren Vertikalschlitten wird
e) ein am Vertikalschlitten angeordneter Ausleger, der an seinem freien Ende ein Inspektionsgerät trägt, in den Kernbereich zwischen dem Außenmantel des Kernbehälters und dem thermischen Schild eingefahren.

Zur weiteren Erläuterung der Erfindung wird auf die Ausführungsbeispiele der Zeichnung verwiesen, in deren

**Figur 1** eine an einem Kernbehälter in Prüfposition gebrachte Vorrichtung gemäß der Erfindung schematisch veranschaulicht ist.

**Figur 2** zeigt in einem vergrößerten Ausschnitt einen in den Zwischenraum zwischen dem thermischen Schild und dem Kernbehälter hineinragenden Ausleger der erfindungsgemäßen Vorrichtung. In

**Figur 3** ist eine weitere vorteilhafte Ausgestaltung der Erfindung veranschaulicht, bei der als Ausleger eine Kette vorgesehen ist. In der Ausführungsform gemäß

**Figuren 4 und 5** ist eine insbesondere zur Verwendung bei segmentartig ausgebildeten thermischen Schilden geeignete Vorrichtung veranschaulicht.

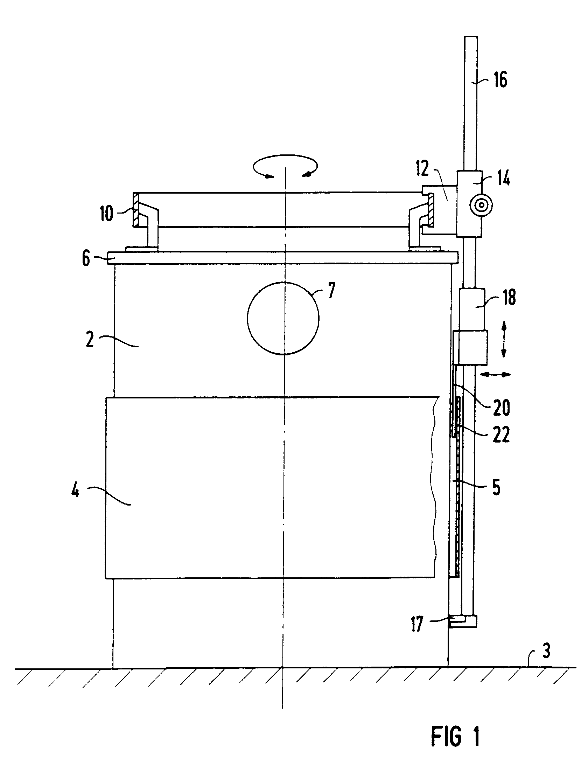

Gemäß **Figur 1** ist ein Kernbehälter 2 auf dem Boden 3 eines Abstellbeckens abgestellt. Der Kernbehälter 2 wird in einem Teilbereich seines Außenmantels von einem thermischen Schild 4 umgeben. Zwischen dem Kernbehälter 2 und dem thermischen Schild 4 befindet sich ein schmaler Spalt 5, der je nach konkreter Ausführungsform zwischen 16 mm und 50 mm betragen kann.

Am oberen Rand 6 des Kernbehälters 2 ist eine Ringschiene 10 des Kernbehälters 2 derart angeordnet, daß die Mittenachse des Kernbehälters 2 und die Mittenachse der Ringschiene 10 zusammenfallen. Auf der Ringschiene 10 ist ein in Umfangsrichtung verfahrbarer Schlitten 12 aufgegleist, der eine Mastführung 14 trägt, in der ein Mast 16 axial, d.h. parallel zur Mittenachse der Ringschiene 10, verschiebbar gelagert ist.

Der Mast 16 ist außerhalb des vom thermischen Schild 4 gebildeten Spaltes 5 angeordnet und zur Stabilisierung an seinem freien Ende über Rollen 17 unterhalb des thermischen Schildes 4 am Außenmantel des Kernbehälters 2 abgestützt. Der Mast 16 trägt einen Vertikalschlitten 18, der auf dem Mast 16 in dessen Längsrichtung verschiebbar angeordnet ist.

Am Vertikalschlitten 18 ist ein Ausleger 20 angeordnet, dessen freies Ende in den zwischen thermischem Schild 4 und Kernbehälter 2 befindlichen Zwischenraum oder Spalt 5 eingeführt werden kann. Der Ausleger 20 ist parallel zu seiner Längsachse fahrbar im Vertikalschlitten 18 gelagert, um ein Einbringen des Auslegers 20 in den Spalt 5 auch bei beengten räumlichen Verhältnissen zu ermöglichen. In einer bevorzugten Ausgestaltung ist als Ausleger 20 ein parallel zur Längsachse des Mastes 16 ausstellbarer Teleskopausleger, vorgesehen, mit dem auch tiefere Prüfpositionen im Spalt 5 erreicht werden können. Der Ausleger 20 ist außerdem quer zur Längsachse des Mastes 16 und senkrecht zur Umfangsrichtung des Kernbehälters 2 verschiebbar, d.h. radial zustellbar, auf dem Vertikalschlitten 18 gelagert, um ein genaues Positionieren über dem Spalt 5 zu ermöglichen. Diese radiale Zustellbewegung des Auslegers 20 ist erforderlich, um einerseits an Hindernissen bei der Bewegung des Vertikalschlittens 18 vorbeizukommen und um andererseits nach Umfahren dieser Hindernisse über dem Spalt 5 positioniert werden zu können. Solche Hindernisse werden beispielsweise durch einen über den Mantel des Kernbehälters 2 vorstehenden Flansch am oberen Rand 6 oder durch einen über die Mantelfläche des Kernbehälters 2 hinausragenden Austrittsstutzen 7 gebildet.

Am freien Ende des Auslegers 20 ist ein Inspektionsgeräteträger 22 für ein zur Inspektion erforderliches Inspektionsgerät, beispielsweise eine Videokamera und/oder ein Ultraschallprüfkopf, angeordnet.

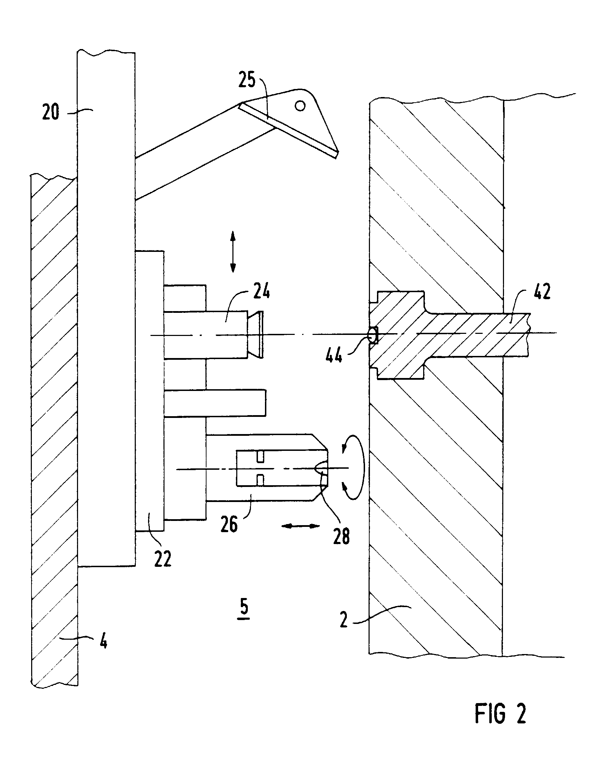

Gemäß **Figur 2** ist der Ausleger 20 mit seinem freien Ende in den ringförmigen Spalt 5 zwischen dem thermischen Schild 4 und dem Kernbehälter 2 eingeführt. Der Ausleger 20 umfaßt an seinem freien Ende eine parallel zu seiner Längsrichtung angeordnete Schlittenführung, auf der ein als Schlitten gestalteter Inspektionsgeräteträger 22 aufgegleist ist, so daß der Inspektionsgeräteträger 22 vertikal verschiebbar ist. Der Inspektionsgeräteträger 22 enthält im Beispiel der Figur eine Videokamera 24 sowie einen Prüfkopf 26 zur zerstörungsfreien Werkstoffprüfung, beispielsweise einen Ultraschallprüfkopf.

Der Prüfkopf 26 ist auf dem Inspektionsgeräteträger 22 drehbar um eine senkrecht zur Längsrichtung des Auslegers 20 und senkrecht zur Umfangsrichtung des Kernbehältes 2 orientierte Drehachse gelagert. Außerdem ist der Prüfkopf 26 auf dem Inspektionsgeräteträger 22 in Richtung dieser Drehachse verschiebbar angeordnet.

Mit Hilfe der Videokamera 24 kann der Inspektionsgeräteträger 22 exakt auf eine zu prüfende Schraube 42 im Kernbehälter 2 ausgerichtet werden. Die Schraube 42 wird hierzu genau in eine vorgegebene Bildposition an einem Überwachungsmonitor gefahren. Durch den festgelegten Abstand zwischen der Videokamera 24 und dem Prüfkopf 26 kann dieser daraufhin exakt in eine Position über die Schraube 42 gefahren werden und genau auf den Kopf der Schraube 42, die im Beispiel in der Figur mit einem Sicherungsstift 44 versehen ist, aufgesetzt werden.

Die Drehbarkeit des Prüfkopfes 26 ist dabei erforderlich, um den in seiner Oberflächenform an die Kopf form der Schraube 42 angepaßten Prüfkopf 26 korrekt zur Orientierung des Schraubenkopfes auszurichten. Im Ausführungsbeispiel handelt es sich bei der Schraube 42 um eine Schlitzschraube mit einem Sicherungsstift 44, zu dem eine in der Koppelfläche des Prüfkopfes 26 befindliche Nut 28 ausgerichtet werden muß.

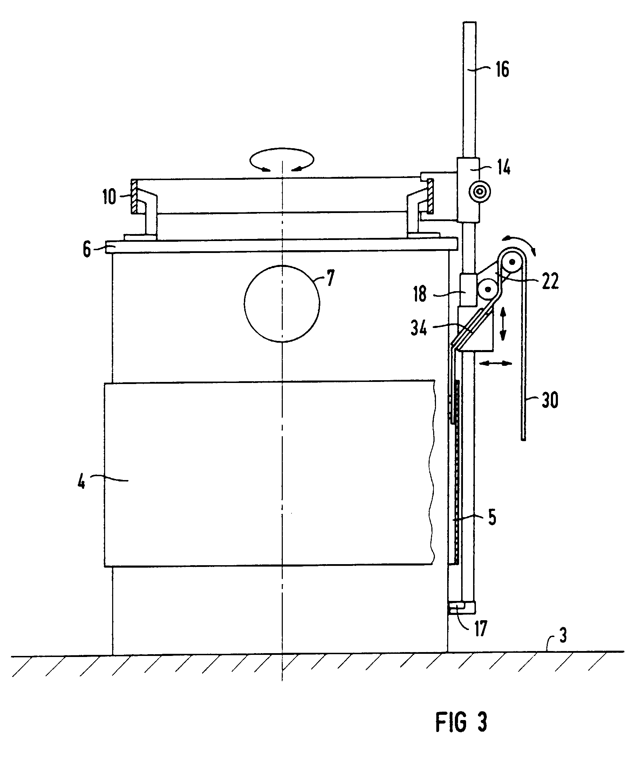

In **Figur 3** ist eine weitere vorteilhafte Ausgestaltung der Erfindung dargestellt, bei der als Ausleger eine Kette 30 vorgesehen ist, die über am Vertikalschlitten 18 angeordnete Führungsrollen 32 geführt ist. Am Vertikalschlitten 18 ist zur Führung der Kette 30 eine Kettenführung 34 vorgesehen, die zur genauen Positionierung des freien Endes der Kette 30 quer zur Längsrichtung des Mastes 16 und zur Umfangsrichtung des Kernbehälters 2 verschoben werden kann. Die Abmessungen der Glieder der Kette 30 sind an den Spalt 5 angepaßt, so daß ein Pendeln der im Spalt 5 hängenden Kette 30 vermieden ist.

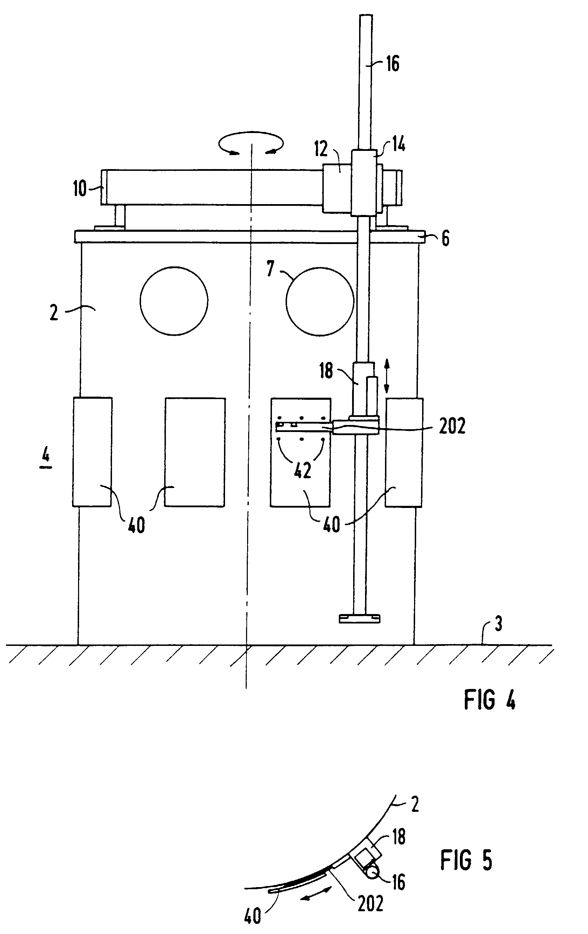

Im Ausführungsbeispiel gemäß **Figur 4** ist der Kernbehälter 2 von einem thermischen Schild 4 umgeben, das aus mehreren räumlich voneinander getrennten Ringsegmenten 40 besteht. In diesem Fall kann am Vertikalschlitten 18 ein sich quer zur Längsachse des Mastes 16 erstreckender Ausleger 202, vorzugsweise ein Teleskopausleger angeordnet werden, der gemäß **Figur 5** entsprechend der Krümmung der Wand des Kernbehälters 2 gebogen und in Umfangsrichtung verschiebbar am Vertikalschlitten 18 gelagert ist.

Mit der in Figuren 4 und 5 dargestellten Ausgestaltung des Auslegers kann die insbesondere bei diesen Bauformen des thermischen Schildes durch eng benachbarte Schrauben 42, mit denen der thermische Schild 4 am Kernbehälter 2 fixiert ist, von oben schwer zugänglichen Kernumfassungsschrauben geprüft werden.

Auch bei den in den Ausführungsbeispielen gemäß Figur 3 bis 5 dargestellten Auslegern ist jeweils am freien Ende des Auslegers eine Schlittenführung für einen Inspektionsgeräteträger gemäß Figur 2 angeordnet, so daß der Inspektionsgeräteträger bei ruhendem Ausleger in dessen Längsrichtung verfahren werden kann.

## Patentansprüche

1. Vorrichtung zur Inspektion eines Außenmantels eines Kernbehälters (2) im Bereich eines ihn umgebenden thermischen Schildes (4), mit
a) einer auf dem Kernbehälter (2) fixierbaren Ringschiene (10),
b) einem in Umfangsrichtung auf der Ringschiene (10) verfahrbaren Schlitten (12),
c) einem am Schlitten (12) axial verschiebbar gelagerten Mast (16),
d) einem am Mast (16) in Richtung seiner Längsachse verfahrbaren Vertikalschlitten (18) sowie
e) einem am Vertikalschlitten (18) angeordneten, in den Bereich zwischen dem Außenmantel des Kernbehälters (2) und dem thermischen Schild (4) einbringbaren Ausleger (20), der an seinem freien Ende ein Inspektionsgerät trägt.

2. Vorrichtung nach Anspruch 1, bei der ein quer zur Längsachse des Mastes (16) verschiebbar auf dem Vertikalschlitten (18) angeordneter Ausleger (20) vorgesehen ist.

3. Vorrichtung nach einem der vorhergehenden Ansprüche, bei der als Ausleger eine Kette (30) vorgesehen ist.

4. Vorrichtung nach einem der vorhergehenden Ansprüche, mit einem Ausleger (20, 30), der an seinem freien Ende einen in seiner Längsrichtung verfahrbaren Inspektionsgeräteträger (22) aufnimmt.

5. Vorrichtung nach Anspruch 4, mit einer auf dem Inspektionsgeräteträger (22) angeordneten Videokamera (24).

6. Vorrichtung nach Anspruch 4 oder 5, mit einem auf dem Inspektionsgeräteträger (22) quer zur Längsachse des Auslegers (20) verschiebbar angeordneten Prüfkopf (26) zur zerstörungsfreien Werkstoffprüfung.

7. Vorrichtung nach einem der vorhergehenden Ansprüche, bei der bei einem aus räumlich voneinander getrennten Ringsegmenten (40) bestehenden thermischen Schild ein sich quer zur Längsachse des Mastes (16) erstreckender, an die Krümmung des Kernbehälters (2) angepaßter, in Umfangsrichtung verschiebbar angeordneter Ausleger (202) vorgesehen ist.

8. Verfahren zur Inspektion eines Außenmantels eines Kernbehälters (2) im Bereich eines ihn umgebenden thermischen Schildes (4), mit folgenden Verfahrensschritten:
a) auf dem Kernbehälter (2) wird eine Ringschiene (10) befestigt,
b) auf die Ringschiene (10) wird ein in Umfangsrichtung verfahrbarer Schlitten (12) aufgegleist,
c) am Schlitten (12) wird ein axial verschiebbar gelagerter Mast (16) angeordnet,
d) über einen am Mast (16) in Richtung seiner Längsachse verfahrbaren Vertikalschlitten (18) wird
e) ein am Vertikalschlitten (18) angeordneter Ausleger (20), der an seinem freien Ende ein Inspektionsgerät trägt, in den Bereich zwischen dem Außenmantel des Kernbehälters (2) und dem thermischen Schild (4) eingefahren.

## Claims

1. Device for inspecting an outer jacket of a core container (2) in the region of a heat shield (4) surrounding it, having
a) an annular rail (10) which can be fixed to the core container (2),
b) a carriage (12) which is movable on the annular rail (10) in the circumferential direction,
c) a post (16) which is mounted in an axially displaceable manner on the carriage (12),
d) a vertical carriage (18) which is movable on the post (16) in the direction of its longitudinal axis, and
e) an outrigger (20) which is arranged on the vertical carriage (18), can be introduced into the region between the outer jacket of the core container (2) and the heat shield (4) and supports an inspection device at its free end.

2. Device according to claim 1, wherein an outrigger (20) is provided which is displaceably arranged on the vertical carriage (18) at right angles to the longitudinal axis of the post (16).

3. Device according to one of the preceding claims, wherein a chain (30) is provided as outrigger.

4. Device according to one of the preceding claims, having an outrigger (20, 30) which at its free end accommodates an inspection device carrier (22) which is movable in its longitudinal direction.

5. Device according to claim 4, having a video camera (24) arranged on the inspection device carrier (22).

6. Device according to claim 4 or 5, having a probe (26) displaceably arranged on the inspection device carrier (22) at right angles to the longitudinal axis of the outrigger (20) for non-destructive materials testing.

7. Device according to one of the preceding claims, wherein, with a heat shield consisting of annular segments (40) which are spatially separate from each other, an outrigger (202) is provided which extends at right angles to the longitudinal axis of the post (16), is adapted to the curvature of the core container (2) and is displaceably arranged in the circumferential direction.

8. Method for inspecting an outer jacket of a core container (2) in the region of a heat shield (4) surrounding it, having the following procedural steps:
a) an annular rail (10) is secured to the core container (2),
b) a carriage (12) which is movable in the circumferential direction is mounted on the annular rail (10),
c) a post (16) which is mounted in an axially displaceable manner is arranged on the carriage (12),
d) by way of a vertical carriage (18) which is movable on the post (16) in the direction of its longitudinal axis,
e) an outrigger (20), which is arranged on the vertical carriage (18) and which supports an inspection device at its free end, is moved into the region between the outer jacket of the core container (2) and the heat shield (4).

## Revendications

1. Dispositif d'inspection de l'enveloppe extérieure d'une cuve (2) de réacteur nucléaire dans la région d'un bouclier (4) thermique qui l'entoure comprenant
a) un rail (10) annulaire pouvant être fixé en position sur la cuve (2) de réacteur,
b) un coulisseau (12) pouvant être déplacé en direction circonférentielle sur le rail (10) annulaire,
c) un poteau (16) monté sur le coulisseau (12) en pouvant coulisser axialement,
d) un coulisseau (18) vertical pouvant être déplacé sur le poteau (16) dans la direction de son axe longitudinal, et
e) une flèche (20), disposée sur le coulisseau (18) vertical, qui peut être introduite dans la région située entre l'enveloppe extérieure de la cuve (2) de réacteur et le bouclier (4) thermique et qui porte un appareil d'inspection à son extrémité libre.

2. Dispositif suivant la revendication 1, dans lequel il est prévu une flèche (20) disposée sur le coulisseau (18) vertical en pouvant être déplacée transversalement à l'axe longitudinal du poteau (16).

3. Dispositif suivant l'une des revendications précédentes. dans lequel une chaîne (30) est prévue comme flèche.

4. Dispositif suivant l'une des revendications précédentes. comprenant une flèche (20, 30) qui reçoit à son extrémité libre un support (22) d'appareils d'inspection qui peut être déplacé dans sa direction longitudinale

5. Dispositif suivant la revendication 4, comprenant une caméra (24) vidéo disposée sur le support (22) d'appareils d'inspection.

6. Dispositif suivant la revendication 4 ou 5, comprenant une tête (26) de contrôle pour le contrôle non destructif de matériaux, qui est disposée sur le support (22) d'appareils d'inspection en pouvant se déplacer transversalement à l'axe longitudinal de la flèche (20).

7. Dispositif suivant l'une des revendications précédentes, dans lequel il est prévu, pour un bouclier thermique constitué de segments (40) annulaires spatialement séparés les uns des autres, une flèche (202) s'étendant transversalement à l'axe longitudinal du poteau (116), adaptée à la courbure de la cuve (2) de réacteur et disposée en pouvant être déplacée en direction circonférentielle.

8. Procédé d'inspection de l'enveloppe extérieure d'une cuve (2) de réacteur nucléaire dans la région d'un bouclier (4) thermique qui l'entoure comprenant les étapes suivantes :
a) un rail (10) annulaire est fixé sur la cuve (2) de réacteur.
b) un coulisseau (12), pouvant être déplacé en direction circonférentielle. est enraillé sur le rail (10) annulaire,
c) un poteau (16), monté avec possibilité de coulissement axial, est disposé sur le coulisseau (12),
d) au moyen d'un coulisseau (18) vertical pouvant être déplacé sur le poteau (16) dans la direction de son axe longitudinal,
e) on introduit, dans la région située entre l'enveloppe extérieure de la cuve (2) de réacteur et le bouclier (4) thermique, une flèche (20) qui est disposée sur le coulisseau (18) vertical et qui porte un appareil d'inspection à son extrémité libre.
